# EUROPÄISCHE PATENTANMELDUNG

(11) **EP 0 557 917 A1**
(43) Veröffentlichungstag der Anmeldung: **01.09.1993**
(21) Anmeldenummer: 93102718.9
(22) Anmeldetag: 20.02.1993
(51) Int. Cl.: G01P 1/02, G01P 15/125

(54) **Beschleunigungsgeber**

(30) Priorität: 27.02.1992 DE 9202533 U
(71) Anmelder: VDO Adolf Schindling AG, D-60326 Frankfurt/Main (DE)
(72) Erfinder: Plankenhorn, Horst, Dipl.-Ing. (FH), W-7730 Villingen-Schwenningen (DE); Gurtner, Johann, Dipl.-Ing. (FH), W-7734 Brigachtal-Klengen (DE)

(57) **Zusammenfassung**

Es wird ein Beschleunigungsgeber mit einem in mikromechanischer Struckturtechnik hergestellten kapazitiven Beschleunigungssensor (8) vorgeschlagen, welcher unmittelbar auf dem Sockel (1) eines zweiteiligen, eine Leiterplattenbestückung gestattendes Gehäuse (3) angebracht ist. Eine die Auswerteschaltung des Beschleunigungsgebers tragende Leiterplatte (18) ist ebenfalls auf dem Sockel (1) befestigt und derart dem Beschleunigungssensor (8) zugeordnet, daß die Leitungsverbindungen (14) zwischen dem Beschleunigungssensor (8) und der Leiterplatte (18) so kurz wie möglich gehalten sind.

## Beschreibung

Die Erfindung betrifft einen Beschleunigungsgeber mit wenigstens einem in mikromechanischer Strukturtechnik hergestellten, kapazitiven Beschleunigungssensor.

Bei derartigen Gebern wird die Beschleunigungsmessung auf eine kapazitive Abstandsmessung zwischen einer oder zwei feststehenden Elektroden und einer beweglichen Elektrode, die einer aus einem Siliziumsubstrat schwingungsfähig herausstrukturierten Masse zugeordnet ist, zurückgeführt. Dieses Meßprinzip zeichnet sich bekanntlich durch eine hohe Empfindlichkeit aus, wobei durch Anwendung des Differentialmeßverfahrens z. B. temperaturbedingte Meßfehler durch Eigenkompensation eliminierbar sind und eine zufriedenstellende Linearität erzielt wird.

Auf der anderen Seite sind die meßwertabhängigen Kapazitätsänderungen bei einem mikromechanischen Sensor extrem klein, so daß Einflüsse durch kondensierende bzw. ausfrierende Feuchtigkeit, Korrosion der Kontaktstellen der Verbindungsleitungen zwischen dem Sensor und einer Auswerteschaltung sowie insbesondere durch diese Verbindungsleitungen verursachte parasitäre Kapazitäten, aber auch Einstrahlungen elektrischer Felder sich in erheblichem Maße nachteilig auf die Meßgenauigkeit, insbesondere was die Langzeitstabilität anbelangt, auswirken können.

Außerdem setzt die mikromechanische Herstellung kapazitiver Beschleunigungssensoren einen hohen Bedarf voraus und erfordert für den betreffenden Beschleunigungsgeber eine großseriengerechte Architektur, eine handelsfähige und vielfältig verwendbare Bauform, gegebenenfalls auch eine maschinelle Handhabbarkeit.

Aufgabe der vorliegenden Erfindung war es daher, einen Beschleunigungsgeber zu schaffen, der für die im Kraftfahrzeug herrschenden, klimatischen Bedingungen geeignet ist und bezgl. Herstellung und Anwendung den Anforderungen der Großserie gerecht wird.

Die Lösung der Aufgabe sieht ein zweiteiliges Gehäuse vor, welches eine Leiterplattenbestückung gestattet und hermetisch dicht verschließbar ist und ferner, daß in dem Gehäuse der Beschleunigungssensor und eine Auswerteschaltung mit auf einem Schaltungsträger kontaktierten elektronischen Bauelementen angeordnet sind.

Weitere vorteilhafte Ausbildungen beschreiben die Unteransprüche.

Der entscheidende Vorzug der gefundenen Lösung ist darin zu sehen, daß der Beschleunigungsgeber einen handelsfähigen, mit einer Leiterplatte steckbar kontaktierbaren Elektronikbaustein darstellt, welcher an seinem Ausgang ein eindeutiges, über eine größere Distanz übertragbares und mit einfachen Mitteln verarbeitbares Meßsignal liefert. Dies gilt insbesondere für eine Meßanordnung, bei der als Beschleunigungssensor ein mit einer auf engem Raum realisierbaren Pulsweitenmodulationsschaltung verknüpfter Differentialkondensator Anwendung findet. Dabei ist hervorzuheben, daß durch die unmittelbare Befestigung des Beschleunigungssensors auf dem Sockel wegen der nahe beieinander liegenden Temperaturdehnungskoeffizienten der Einfluß temperaturbedingter, mechanischer Spannungen auf das Meßergebnis weitgehend vermieden ist. Ferner ist dafür gesorgt, daß die Leitungsverbindungen zwischen dem Beschleunigungssensor und der die Auswerteschaltung tragenden Leiterplatte so kurz wie möglich gehalten sind. Einen fertigungstechnischen Vorteil stellt die Tatsache dar, daß bei der gewählten Anordnung von Beschleunigungssensor und Leiterplatte bzw. einer entsprechend ausgebildeten Zunge der Leiterplatte das Bonden der Verbindungsdrähte im wesentlichen in einer Ebene erfolgen kann. Die hermetisch dichte Ausbildung des Gehäuses gestattet das Einschließen eines Schutzgases, das gleichzeitig als Dämpfungsmedium für den Biegeschwinger des Beschleunigungssensors dient, wobei die Dämpfung über den Druck des Schutzgases einstellbar ist. Außerdem kann infolge der hermetischen Abdichtung des Gehäuses ein Beschleunigungssensor verwendet werden, welcher mit minimiertem Prozeßaufwand als Glas-Silizium-Glas-Schichtpaket hergestellt ist und bei welchem wegen der Herausführung der Leitungen zwischen den Elektroden und den Anschlußkontakten der Raum, in welchem sich der Biegeschwinger befindet, mit der Außenatmosphäre in Verbindung steht.

Die Erfindung stellt somit einen kostenminimierten, für die Serienfertigung geeigneten Beschleunigungsgeber dar, der sich mit gut reproduzierbarer Empfindlichkeit, einem linearen Arbeitsbereich sowie einer robusten Architektur insbesondere für den Einsatz im Kraftfahrzeug eignet.

Eine besondere Optimierung ist außerdem darin zu sehen, daß durch den Einbau von zwei oder drei Beschleunigungssensoren in ein und dasselbe Gehäuse mit dem betreffenden Beschleunigungsgeber mehrere Dimensionen sensierbar und gleichzeitig für die Auswertung verwendete, integrierte elektronische Bauelemente in einem höheren Grade nutzbar sind.

Im folgenden sei die Erfindung anhand der beigefügten Zeichnungen näher erläutert.

Es zeigen
Fig. 1 den Beschleunigungsgeber in einer perspektivischen Darstellung,
Fig. 2 einen Schnitt eines Ausführungsbeispiels des Beschleunigungsgebers mit einem Beschleunigungssensor,
Fig. 3 eine Draufsicht des Beschleunigungsgebers gemäß Fig. 2 mit abgenommener Abdeckung,
Fig. 4 eine Draufsicht des bestückten Sockels eines Ausführungsbeispiels des Beschleunigungsgebers mit zwei Beschleunigungssensoren,
Fig. 5 eine Seitenansicht des Beschleunigungsgebers gemäß Fig. 4.

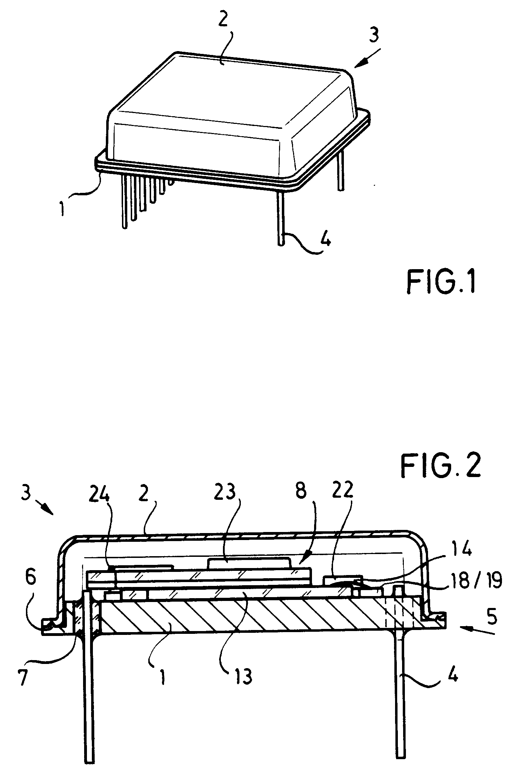

Die Fig. 1 zeigt den Beschleunigungsgeber als einen Elektronikbaustein mit einem aus einem Sockel 1 und einer Abdeckung 2 bestehenden Gehäuse 3. Im Sockel 1 befestigte Kontaktstifte, von denen einer mit 4 bezeichnet ist, dienen zusätzlich der unmittelbaren Befestigung des Gehäuses 3 beispielsweise auf einer Leiterplatte eines Gerätes. Bei dem dargestellten Gehäuse 3 bestehen Sockel 1 und Abdeckung 2 aus Metall, haben somit schirmende Wirkung gegenüber einstrahlenden elektrischen Feldern und sind an einem beiderseits ausgebildeten Rand 5, vorzugsweise unter Zwischenschaltung einer umlaufenden Rippe 6, miteinander verschweißt und gegebenenfalls schutzgasgefüllt. Die Kontaktstifte 4 sind, wie Fig. 2 zeigt, beispielsweise mittels einer Glasmasse 7 als Isolierung im Sockel 1, der vorzugsweise aus Stahl mit der Warenbezeichnung KOVAR hergestellt ist, eingebettet. Der Sockel 1 oder beide Gehäuseteile können auch aus Keramik hergestellt und, wenn die Schirmung gegen elektrische Felder erforderlich ist, metallisiert sein.

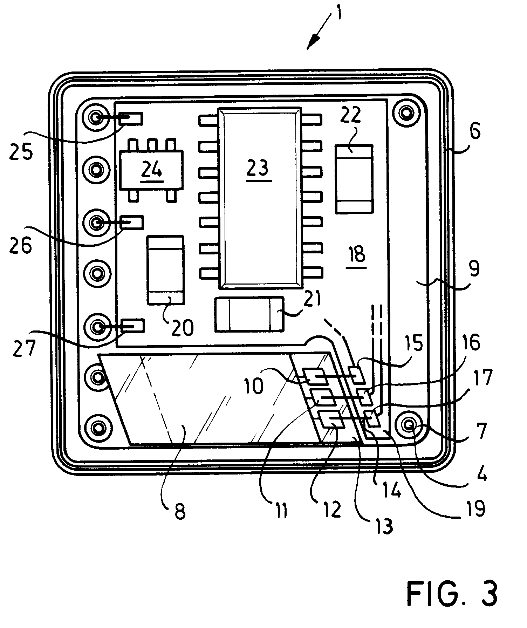

Die Fig. 2 und 3 zeigen ferner einen mit 8 bezeichneten, vorzugsweise als Differentialkondensator ausgebildeten, mikromechanischen Beschleunigungssensor, welcher unmittelbar auf einer Innenfläche 9 des Sockels 1 befestigt ist. Wie bereits eingangs erwähnt, besteht der Beschleunigungssensor 8 aus einem Glas-Silizium-Glas-Schichtpaket, bei dem das kräftesensierende Element als Biegeschwinger aus der Siliziumschicht herausstrukturiert ist. Mit 10, 11 und 12 sind vorzugsweise auf einer Glasschicht 13 des Beschleunigungssensors 8 nebeneinander angeordnete, den nicht dargestellten Elektroden des Beschleunigungssensors 8 zugeordnete Anschlußkontakte bezeichnet. Diese sind mittels angebondeter Drähte - einer ist mit 14 bezeichnet - mit Kontakten 15, 16 und 17 verbunden, welche sich auf einer als Schaltungsträger dienenden Leiterplatte 18 bzw. einer an dieser ausgebildeten Zunge 19 befinden. Die Leiterplatte 18 trägt die für die Auswertung der von dem Beschleunigungssensor abgelieferten Signale erforderlichen elektronischen Bauelemente, nämlich Widerstände 20, 21 und 22, ein Mehrfachgatter 23 und ein weiteres Gatter 24. Der Einfachheit halber sind die auf der Leiterplatte 18 aufgebrachten Leiterbahnen nicht vollständig dargestellt. Von den Kontakten 25, 26 und 27 dienen zwei dem Anlegen der Versorgungsspannung, während einer das Meßsignal führt.

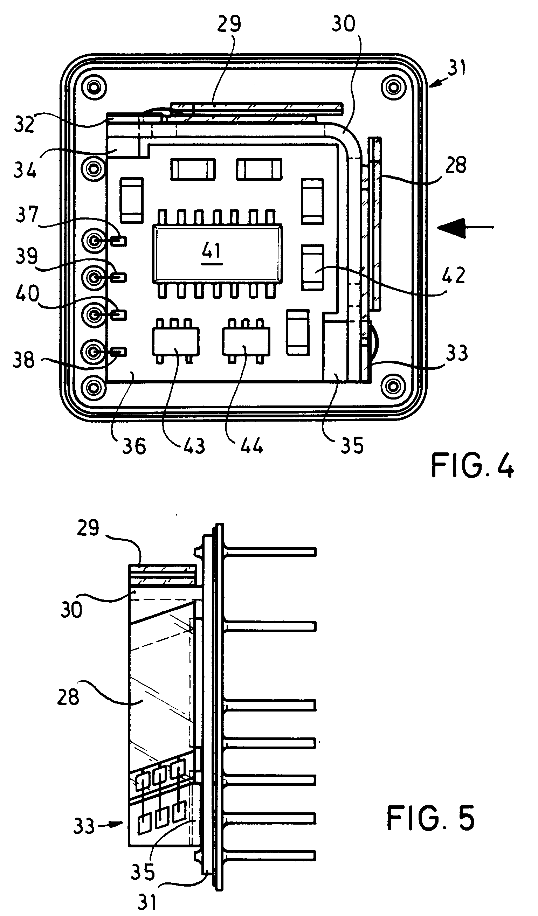

Das Ausführungsbeispiel gemäß den Fig. 4 und 5 zeigt einen Beschleunigungsgeber mit zwei Beschleunigungssensoren 28 und 29 mit dem bereits beschriebenen Aufbau. Bei diesem Ausführungsbeispiel ist ein L-förmiger Träger 30 vorgesehen, der stirnseitig, vorzugsweise an drei Punkten, mit einem Sockel 31 verschweißt ist. Die Beschleunigungssensoren 28 und 29 sind an den nach außen weisenden Flächen des Trägers 30 befestigt. Außerdem sind an diesen Flächen Kontaktträger 32 und 33 befestigt, welche mittels flexibler Leitungsteile 34 und 35 mit einer auf dem Sockel 31 befestigten Leiterplatte 36 verbunden sind. Wie insbesondere aus der Fig. 5 ersichtlich ist, sind die Kontaktträger 32 und 33 unmittelbar den im einzelnen nicht bezeichneten Anschlußkontakten der Beschleunigungssensoren 28 und 29 zugeordnet. Die Leiterplatte 36 trägt in diesem Falle die elektronischen Bauelemente für die Auswertung beider, rechtwinklig zueinander stehender Beschleunigungssensoren und weist demzufolge außer den Anschlüssen 37 und 38 für eine gemeinsame Spannungsversorgung zwei Meßsignalausgänge 39 und 40 auf. Ein Mehrfachgatter 41 wird für die Auswertung der Signale beider Beschleunigungssensoren 28 und 29 genutzt. Ferner trägt die Leiterplatte 36 Widerstände, von denen einer mit 42 bezeichnet ist, sowie jeweils den Beschleunigungssensoren 28 bzw. 29 zugeordnete Gatter 43 und 44.

Der Vollständigkeit halber sei erwähnt, daß wenn drei Beschleunigungssensoren in dem Gehäuse 3 angeordnet werden sollen, die elektronischen Bauelemente auch in zwei Ebenen angeordnet werden können, d. h. zwei Leiterplattenteile, die in geeigneter Weise durch flexible Leiterbahnen miteinander verbunden sind, übereinander angeordnet werden, derart daß die elektronischen Bauteile gegeneinander weisen. Außerdem läßt sich eine weitere Raumnutzung dadurch erzielen, daß die Auswerteschaltung, was bei der gewählten Schaltung leicht durchführbar ist, als integrierte Schaltung ausgebildet wird. Dadurch ist es bei Verwendung mehrerer Beschleunigungssensoren in einem Gehäuse ohne weiteres möglich, das Gehäuse als Flachgehäuse auszubilden, dessen Höhe der Breite eines Beschleunigungssensors entspricht.

## Patentansprüche

1. Beschleunigungsgeber mit wenigstens einem in mikromechanischer Strukturtechnik hergestellten, kapazitiven Beschleunigungssensor,
gekennzeichnet durch
ein zweiteiliges Gehäuse (3), welches eine Leiterplattenbestückung gestattet und hermetisch dicht verschließbar ist und dadurch daß in dem Gehäuse (3) der Beschleunigungssensor (8) und eine Auswerteschaltung mit auf einem Schaltungsträger (18, 19) kontaktierten elektronischen Bauelementen (20 bis 24) angeordnet sind.

2. Beschleunigungsgeber nach Anspruch 1,
dadurch gekennzeichnet,
daß der Schaltungsträger (18, 19) derart ausgebildet und dem Beschleunigungssensor zugeordnet ist, daß die Länge der Verbindungsleitungen zwischen den Anschlußkontakten des Beschleunigungssensors und der Auswerteschaltung jeweils ein Minimum darstellt.

3. Beschleunigungsgeber nach Anspruch 1,
dadurch gekennzeichnet,
daß der Schaltungsträger (18, 19) und der Beschleunigungssensor (8) nebeneinander auf einer Fläche des einen als Sockel (1) ausgebildeten Gehäuseteils befestigt sind.

4. Beschleunigungsgeber nach Anspruch 1,
dadurch gekennzeichnet,
daß die Gehäuseteile (1, 2) in einer Schutzgasatmosphäre miteinander verschweißt werden.

5. Beschleunigungsgeber nach Anspruch 1,
dadurch gekennzeichnet,
daß das Gehäuse (3) elektrisch leitfähig ausgebildet ist und
daß die der Leiterplattenbestückung dienenden Befestigungs- und Kontaktstifte (4) in dem als Sockel (1) ausgebildeten Gehäuseteil isoliert angebracht sind.

6. Beschleunigungsgeber nach Anspruch 1,
dadurch gekennzeichnet,
daß in dem Gehäuse (3) mehrere Beschleunigungssensoren (28, 29) in rechtwinklig zueinander stehenden Ebenen angeordnet sind und
daß der Schaltungsträger (36) flexibel ausgebildet ist und mit wenigstens einem Kontaktträger (32, 33) in einer Parallellage zu den Anschlußkontakten eines Beschleunigungssensors (28, 29) angebracht ist.

7. Beschleunigungsgeber nach Anspruch 1,
dadurch gekennzeichnet,
daß der Beschleunigungssensor (8) als Differentialkondensator ausgebildet ist und daß die Auswerteschaltung zwei Univibratoren und ein Antivalenzglied enthält.
